# EUROPEAN PATENT APPLICATION

(11) **EP 3 852 254 A1**
(43) Date of publication of application: **21.07.2021**
(21) Application number: 20152321.4
(22) Date of filing: 16.01.2020
(51) Int. Cl.: H02K 53/00

(54) **MAGNETIC POLARISED GENERATOR**

(71) Applicant: Spacem Enerji Sistemleri Ltd. Sti., 47400 Kiziltepe / Mardin (TR)
(72) Inventor: YOLDAS, HAKAN, 47400 MARDIN (TR)

(57) **Abstract**

The invention is a modular device that generates endless electricity, in terms of operating logic, without a source input such as fossil fuel, etc.. It converts the magnetic gravity force of the world into motion energy, and converts motion energy into electrical energy. The system consists of a motor and alternators as well as cylinder blocks and magnets which are sequenced in an order and attached to these blocks. Magnetic blocks are grouped in a specific order, poles and dimensions. The invention can be used for heating, cooling, processing, lighting and for all machines, equipment and systems which use electrical energy. The device can be produced as mobile and / or fixed, on-grid / off-grid upon request.

## Description

### 1. Technical field: Electricity

### 2. Background information and prior art:

In fossil fuel generators currently used, there must be a constant supply of fuel in order to maintain electricity production. Fossil fuels have a negative impact on the environment. In addition to that, production and cost increase in direct proportion. Systems used for electricity generation today include hydroelectric power plants, geothermal power plants, wind power plants, natural gas-fired thermal power plants, thermal power plants using different fossil fuels, systems that are formed by using sea fluctuation- although not very common- and finally nuclear power plants. In this context, there is not a prior invention.

### 3. A description of the problem your invention solves:

The need for electrical energy increases day by day. We can list the biggest problems of the methods used to meet this need as;
- high initial investment costs,
- negative impact on the environment and ecosystem (thermal, hydroelectric power plants, wind power plants),
- environmental disasters which cannot be foreseen and prevented in a negative situation (nuclear power plants),
- the footprint, production efficiency - compared with our device - (solar power plants occupy a large space and operate 8 hours maximum per day)
Our invention, which we anticipate will eliminate all the deficiencies we have seen in previous systems;
- can operate independently from climate conditions all over the world,
- can operate without any production input, any fuel and so on.
- does not take up space compared to its alternatives,
- is portable
- can be produced to the desired extent
- has low maintenance and spare parts costs
- operates 24/7
- eliminates the deficiencies encountered in previous situations with its features such as the immediate start of efficiency after commissioning.

### 4. A detailed description of your invention

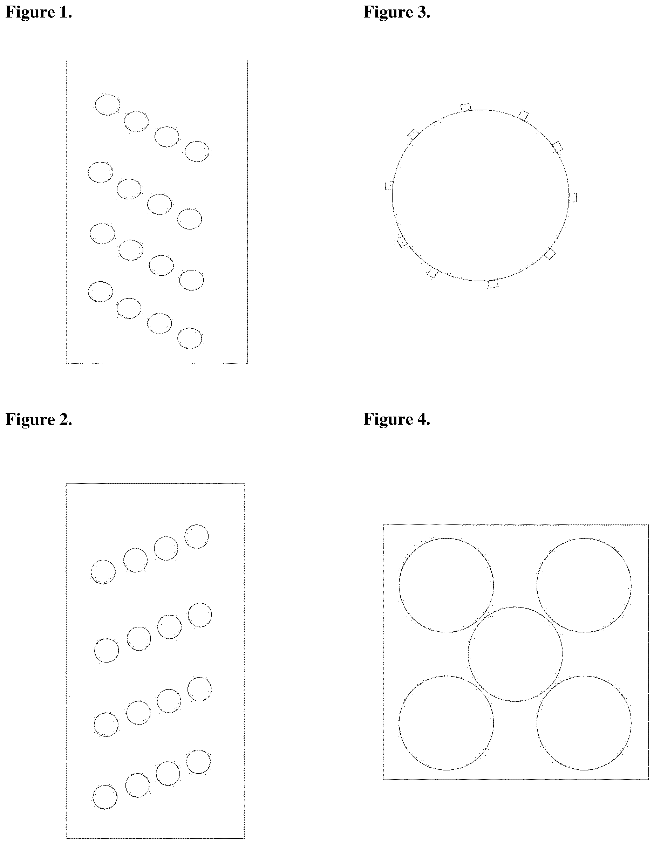

The invention generally supplies energy output from the system without external dependence. The system consists of a trigger motor and alternators. The motor makes alternators rotate. The motor and alternators are all connected to a magnet block (Fig. 1-2). Alternators are used in combination with magnet polarized stator. Speed control between alternator and magnetic blocks can be set to the desired rpm. Alternators transfer electricity to the batteries.The transferred energy taken from the batteries is made usable in electric networks via the inverter. If the motor is aligned to the left, the 1st stage alternators are aligned to the right. If the motor is aligned to the right, the 1st stage alternators are aligned to the left.

The magnet block consists of N52-Neodymium perforated cylinder magnets and cylinder blocks which the magnets are attached to (Fig.4). Cylinder magnets are sequenced as groups of 4 (Fig. 1-2). The sequencing angle between these 4 magnets is 9.2. Cylinder magnets are 20 mm in diameter. Magnets are attached to cylinders which are 160 mm in diameter, and 76 mm in width. The diameter of magnets could be changed in proportion to the system, which means the blocks which the magnets are attached to could be shortened thus increasing the diameter, or could be extended thus decreasing the diameter. Magnet groups of 4 are sequenced on the cylinder blocks composing 10 groups in total (Fig.3).

When the system is at first triggering motion, it stabilizes itself to the desired voltage and frequency values that we have previously determined. In this way, it both protects the system and allows it to work consistently. The first triggering of the system is carried out by a universal motor. Upon the first triggering, the magnet blocks are activated and actuate the rotors of the alternator. The system adjusts the rotation speed according to the values expected at the output and the power to be drawn.

Air circulation is ensured by using cooling wings positioned in front of the already arranged magnets in groups of 4; therefore, the blocks cool each other and the magnets are prevented from losing their magnetic nature due to heating.

The components of the system could be changed in size by shortening or extending the blocks which the magnets are attached to, making the production of alternative systems possible. All conductive parts of the system shall be connected to the earthing system.

No energy can be created out of thin air. The system described above works completely in accordance with this condition. The source of the energy that changes form in our system is the magnetic gravity force of the world. For this power to be exhausted, the current movements and turns of the universe in which the world resides should terminate completely.

### 5. One example of intended use

It is usable in all sectors where there is production and need for electricity. e.g. industry.

### 6. A list of included drawings

**Figure 1****.** Magnets and the block they are attached to (left block)
**Figure 2****.** Magnets and the block they are attached to (right block)
**Figure 3****.** The side view of the blocks which the magnets are attached to
**Figure 4****.** The side view of the blocks attached to the system

## Claims

1. Cylinder magnets which are sequenced as groups of 4 and which have a 9.2 sequencing angle between each other.

2. Magnet groups of 4 sequenced on the cylinder blocks composing 10 groups in total.

3. Cooling wings positioned in front of the already arranged magnets in groups of 4.
